# EUROPEAN PATENT APPLICATION

(11) **EP 4 694 344 A1**
(43) Date of publication of application: **11.02.2026**
(21) Application number: 25194513.5
(22) Date of filing: 07.08.2025
(51) Int. Cl.: H04W 36/00, H04W 36/36

(54) **METHOD OF CONDITIONAL CELL SWITCH, USER EQUIPMENT AND NETWORK DEVICE**

(30) Priority: 07.08.2024 US 202463680070 P
(71) Applicant: Industrial Technology Research Institute, 310401 Hsinchu (TW)
(72) Inventor: Huang, Nai-Lun, 302 Zhubei City, Hsinchu County (TW)
(74) Representative: Becker Kurig & Partner Patentanwälte mbB

(57) **Abstract**

The present disclosure discloses a method of conditional cell switch applied to a User Equipment, UE, (120). The method includes: upon a cell switch being triggered, stopping, by a processor (221) of the UE (120), a cell switch conditions evaluation if the UE (120) is performing the cell switch conditions evaluation; and determining whether to perform the cell switch conditions evaluation once the cell switch is completed. The determination process includes determining whether at least one execution condition is configured within a selected candidate target configuration, and when determining that the at least one execution condition is configured, performing the cell switch conditions evaluation according to the execution condition once the cell switch is completed. The present disclosure can avoid unnecessary interruption of ongoing cell switch operations while supporting subsequent mobility operations, effectively reducing mobility latency and enhancing mobility management efficiency of wireless communication systems (100).

## Description

### BACKGROUND

### Technical Field

The present disclosure relates to wireless communication technology, and generally related to methods and apparatus for managing conditional cell switch operations during ongoing cell switch execution in wireless communication systems.

### Description of Related Art

In modern wireless communication systems, particularly in 5G NR networks, mobility management plays a critical role in maintaining seamless connectivity for User Equipment (UE) as it moves between different cells. Traditional handover mechanisms rely on Layer 3 (L3) measurements and network-triggered decisions, which, while robust, may result in higher mobility latency.

To address latency concerns, Layer 1/Layer 2 Triggered Mobility (LTM) has been introduced, allowing cell switches to be triggered based on faster L 1 measurements. LTM can be categorized into non-conditional LTM, where the network directly commands the UE to perform cell switch, and conditional LTM, where the UE autonomously triggers cell switch based on pre-configured execution conditions.

However, existing mobility mechanisms face a significant challenge when dealing with concurrent mobility events. Specifically, a technical problem arises when a cell switch execution is already in progress, as conventional approaches do not adequately address how to manage a concurrently active conditional mobility configuration. For instance, if the execution condition for a conditional candidate cell is fulfilled during this period, a dilemma occurs: either interrupting the ongoing switch, which can extend mobility latency, or ignoring the fulfilled condition, which may result in a lost opportunity for a more optimal connection.

Furthermore, to support subsequent mobility operations, more sophisticated handling of conditional evaluations during ongoing cell switch operations to maintain the capability for subsequent conditional cell switches after the current cell switch completion is necessary.

### SUMMARY

In view of the aforementioned challenges, the present disclosure provides methods and apparatus for managing conditional cell switch operations during ongoing cell switch execution. The technical solutions of the present disclosure enable appropriate control of cell switch conditions evaluation when a cell switch is triggered, and determine whether to resume evaluation after cell switch completion based on specific configuration conditions, thereby avoiding unnecessary cell switch interruptions and supporting subsequent mobility operations.

One or more embodiments of the present disclosure provide a method of conditional cell switch applied to a User Equipment (UE). The method comprising: upon a cell switch being triggered, stopping a cell switch conditions evaluation if the UE is performing the cell switch conditions evaluation; and determining whether to perform the cell switch conditions evaluation once the cell switch is completed.

One or more embodiments of the present disclosure provide a user equipment (UE), adapted for performing conditional cell switch. The UE comprises: a transceiver, used for transmitting or receiving signals; a memory, used for storing a program code; and a processor, coupled to the transceiver and the memory, and configured for executing the program code to implement a conditional cell switch method, comprising: upon a cell switch being triggered, stopping a cell switch conditions evaluation if the UE is performing the cell switch conditions evaluation; and determining whether to perform the cell switch conditions evaluation once the cell switch is completed.

One or more embodiments of the present disclosure provide a method adapted for a network device for managing conditional cell switch of a User Equipment (UE). The method comprises: transmitting a conditional configuration to the UE, wherein the conditional configuration comprises at least one candidate cell and at least one execution condition; and instructing a UE behavior during a cell switch execution.

One or more embodiments of the present disclosure provide a network device for managing conditional cell switch of a User Equipment (UE), the network device comprises: a transceiver, used for transmitting or receiving signals; a memory, used for storing a program code; and a processor, coupled to the transceiver and the memory, and configured for executing the program code to implement a conditional cell switch management method, comprising: transmitting a conditional configuration to the UE, wherein the conditional configuration comprises at least one candidate cell and at least one execution condition; and instructing a UE behavior during a cell switch execution.

Based on above, the present disclosure addresses the technical challenge of optimizing mobility latency while maintaining subsequent mobility capabilities. By implementing selective suspension and resumption of cell switch conditions evaluation based on CU-level configuration analysis, the disclosed method prevents unnecessary interruption of ongoing cell switch operations while preserving the ability to continue conditional evaluations for subsequent mobility events. This approach specifically supports intra-CU scenarios where subsequent conditional LTM remains applicable after cell switch completion, and inter-CU scenarios where conditional configurations may need to be appropriately managed or released.

The technical effects achieved by the present disclosure include reduction of mobility latency through prevention of cell switch interruptions, enhanced support for subsequent mobility operations, and intelligent management of conditional evaluation processes during concurrent mobility events. The disclosed solution provides backward compatibility with existing LTM mechanisms while introducing advanced control capabilities for next-generation mobility enhancement features.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a schematic diagram that illustrates a wireless communication system according to an exemplary embodiment of the present disclosure.
FIG. 2 is a block diagram that illustrates a communication device according to an exemplary embodiment of the present disclosure.
FIG. 3 is a flow chart that illustrates a conditional cell switch method performed by a User Equipment according to an exemplary embodiment of the present disclosure.
FIG. 4 is a flow chart that illustrates a method performed by a network device for managing conditional cell switch operations according to an exemplary embodiment of the present disclosure.
FIG. 5 is a flow chart that illustrates conditional cell switch operations with decision processes for resuming evaluation or releasing configuration according to an exemplary embodiment of the present disclosure.
FIG. 6 is a flow chart that illustrates continuing cell switch conditions evaluation during cell switch execution without triggering new cell switches according to an exemplary embodiment of the present disclosure.
FIG. 7 is a flow chart that illustrates storing information of candidate cells during cell switch execution for failure handling according to an exemplary embodiment of the present disclosure.
FIG. 8 is a schematic diagram that illustrates intra-CU cell switch and inter-CU cell switch scenarios according to an exemplary embodiment of the present disclosure.
FIG. 9 is a flow chart that illustrates a priority-based cell switch method according to an exemplary embodiment of the present disclosure.
FIG. 10 is a sequence diagram that illustrates an intra-CU cell switch operation with conditional configuration management according to an exemplary embodiment of the present disclosure.
FIG. 11 is a sequence diagram that illustrates an inter-CU cell switch operation with conditional configuration release according to an exemplary embodiment of the present disclosure.

### DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

The abbreviations in the present disclosure are defined as follows and unless otherwise specified, the acronyms have the following meanings:

| | |
|---|---|
| Abbreviation | Full name |
| CHO | Conditional Handover |
| CLTM | Conditional Layer1/Layer 2 Triggered Mobility |
| CU | Centralized Unit |
| DU | Distributed Unit |
| gNB | next generation Node B |
| HO | Handover |
| IE | Information Element |
| L1/L2/L3 | Layer 1/Layer 2/Layer 3 |
| LTM | Layer1/Layer 2 Triggered Mobility |
| MAC | Medium Access Control |
| NR | New Radio |
| PDCP | Packet Data Convergence Protocol |
| PDU | Protocol Data Unit |
| QoS | Quality of Service |
| RAN | Radio Access Network |
| RAN2, RAN3, RAN1 | Radio Access Network working group #2, #3, #1 |
| RLC | Radio Link Control |
| RRC | Radio Resource Control |
| RSRP | Reference Signal Received Power |
| RSRQ | Reference Signal Received Quality |
| RSSI | Received Signal Strength Indicator |
| SDU | Service Data Unit |
| SIB | System Information Block |
| SINR | Signal to Interference plus Noise Ratio |
| SSB | Synchronization Signal Block |
| UE | User Equipment |
| WG | Working Group |
| UM | Unacknowledge Mode |

Some related technologies are introduced first.

"Configured" in this disclosure may be default/predefined/fixed/configured/activated/indicated/set, ..., but not limited herein.

RRC in this disclosure may be replaced by MAC CE, DCI, ..., but not limited herein.

Communication device in this disclosure may be represented by UE, or gNodeB, but not limited herein.

Combinations of embodiments disclosed in this disclosure is not precluded.

All steps in the embodiment may not be performed in a step-by-step way.

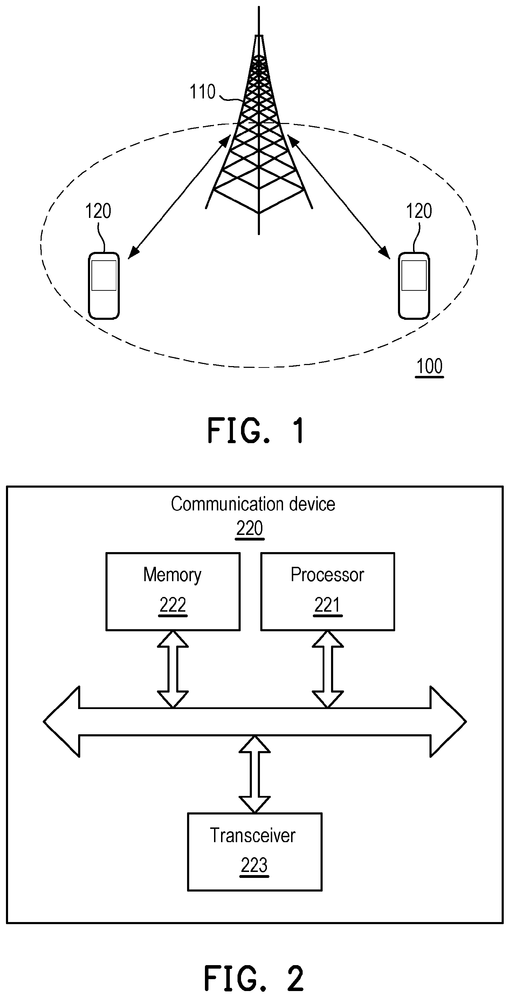

FIG. 1 is a schematic diagram that illustrates a communication system according to an exemplary embodiment of the present disclosure. Referring to FIG. 1, a communication system 100 (e.g., a Long Term Evolution (LTE) system, an LTE-Advanced (LTE-A) system, an LTE-Advanced Pro system, or a 5G NR Radio Access Network (RAN)) typically includes one or more network devices 110 and one or more UEs 120. The UE 120 communicates with the network (e.g., a Core Network (CN), an Evolved Packet Core (EPC) network, an Evolved Universal Terrestrial Radio Access network (E-UTRAN), a 5G Core (5GC), or an internet), through a RAN established by one or more network devices 110.

It should be noted that, in the present disclosure, a UE 120 may include, but is not limited to, a mobile station, a mobile terminal or device, a user communication radio terminal. For example, a UE 120 may be a portable radio equipment, which includes, but is not limited to, a mobile phone, a tablet, a wearable device, a sensor, a vehicle, or a Personal Digital Assistant (PDA) with wireless communication capability. The UE 120 is configured to receive and transmit signals over an air interface to one or more cells in a radio access network.

A network device 110 (or called base station, an NW device, or NW) may be configured to provide communication services according to at least one of the following Radio Access Technologies (RATs): Worldwide Interoperability for Microwave Access (WiMAX), Global System for Mobile communications (GSM, often referred to as 2G), GSM Enhanced Data rates for GSM Evolution (EDGE) Radio Access Network (GERAN), General Packet Radio Service (GPRS), Universal Mobile Telecommunication System (UMTS, often referred to as 3G) based on basic wideband-code division multiple access (W-CDMA), high-speed packet access (HSPA), LTE, LTE-A, eLTE (evolved LTE, e.g., LTE connected to 5GC), NR (often referred to as 5G), and/or LTE-A Pro. However, the scope of the present disclosure should not be limited to the above-mentioned protocols.

A network device 110 may include, but is not limited to, a node B (NB) as in the UMTS, an evolved node B (eNB) as in the LTE or LTE-A, a radio network controller (RNC) as in the UMTS, a base station controller (BSC) as in the GSM/ GSM Enhanced Data rates for GSM Evolution (EDGE) Radio Access Network (GERAN), a next-generation eNB (ng-eNB) as in an Evolved Universal Terrestrial Radio Access (E-UTRA) BS in connection with the 5GC, a next-generation Node B (gNB) as in the 5G Access Network (5G-AN), and any other apparatus capable of controlling radio communication and managing radio resources within a cell. The network device may connect to serve the one or more UEs 120 through a radio interface to the network.

The network device 110 may be operable to provide radio coverage to a specific geographical area using a plurality of cells included in the RAN. The network device 110 may support the operations of the cells. Each cell may be operable to provide services to at least one UE 120 within its radio coverage. Specifically, each cell (often referred to as a serving cell) may provide services to serve one or more UEs 120 within its radio coverage (e.g., each cell schedules the Downlink (DL) and optionally Uplink (UL) resources to at least one UE 120 within its radio coverage for DL and optionally UL packet transmission). The network device 110 may communicate with one or more UEs 120 in the radio communication system through the plurality of cells. As the UE 120 moves within the communication system 100, cell switch operations may be performed to maintain connectivity, including conditional cell switch operations where the UE 120 may autonomously switch between cells based on pre-configured execution conditions.

The communication system 100 supports advanced mobility management features, including Layer 1/Layer 2 Triggered Mobility (LTM) and conditional LTM operations. These mobility enhancements enable reduced latency cell switching compared to traditional Layer 3-based handover mechanisms. The communication system 100 may include multiple Centralized Units (CUs) that manage different groups of cells, allowing for both intra-CU and inter-CU cell switch operations. The network devices 110 may be configured to provide conditional configurations to the UE 120, including candidate cell information and execution conditions for autonomous cell switch decision-making.

It should be understood that the term "and/or" used in this disclosure is only for describing the association relationship of related objects, which means that there may be four relationships, for example, A and/or B may mean four situations: A, B, A and B, A or B. In addition, the character "/" in this disclosure generally indicates that the associated objects are in an "or" relationship.

FIG. 2 is a block diagram that illustrates a communication device according to an exemplary embodiment of the present disclosure. Referring to FIG. 2, the communication device 220 may be a UE or a network device. The communication device 220 may include, but is not limited thereto a processor 221. The processor 221 (e.g., having processing circuitry) may include an intelligent hardware device, e.g., a Central Processing Unit (CPU), a microcontroller, an ASIC, and etc. The processor 221 can call and run a computer program from a memory to implement the method in the embodiment of the disclosure.

Since the program code stored in the communication device 220 adopts all the technical solutions of all the foregoing embodiments when being executed by the processor 221, it at least has all the advantageous effects brought by all the technical solutions of all the foregoing embodiments, and no further description is incorporated herein.

Optionally, as shown in FIG. 2, the communication device 220 may further include a memory 222. The memory 222 may include computer-storage media in the form of volatile and/or non-volatile memory. The memory 222 may be removable, non-removable, or a combination thereof. Exemplary memory includes solid-state memory, hard drives, optical-disc drives, and etc. The processor 221 may call and run a computer program from the memory 222 to implement the method in the embodiment of the disclosure.

The memory 222 may be a separate device independent of the processor 221, or may be integrated in the processor 221.

Optionally, as shown in FIG. 2, the communication device 220 may further include a transceiver 223, and the processor 221 may control the transceiver 223 to communicate with other devices. The transceiver 223 having a transmitter (e.g., transmitting/transmission circuitry) and a receiver (e.g., receiving/reception circuitry) may be configured to transmit and/or receive conditional configurations, cell switch commands, and measurement reports related to conditional cell switch operations. The transceiver 223 may be configured to receive data and control channels for mobility management operations.

Specifically, the transceiver 223 may send information or data to other devices, or receive information or data sent by other devices.

Specifically, the transceiver 223 may include a transmitter and a receiver. The transceiver 223 may further include an antenna, and the number of antennas may be one or more.

Optionally, the communication device 220 may specifically be a network device in an embodiment of the disclosure, and the communication device 220 may implement the corresponding process implemented by the network device in various methods of the embodiment of the disclosure. For the conciseness, related descriptions are omitted.

Optionally, the communication device 220 may specifically be a mobile terminal, a terminal device, or a UE in an embodiment of the disclosure, and the communication device 220 may implement the corresponding process implemented by the mobile terminal, the terminal device, or the UE in various methods in the embodiment of the disclosure. For conciseness, related description is omitted.

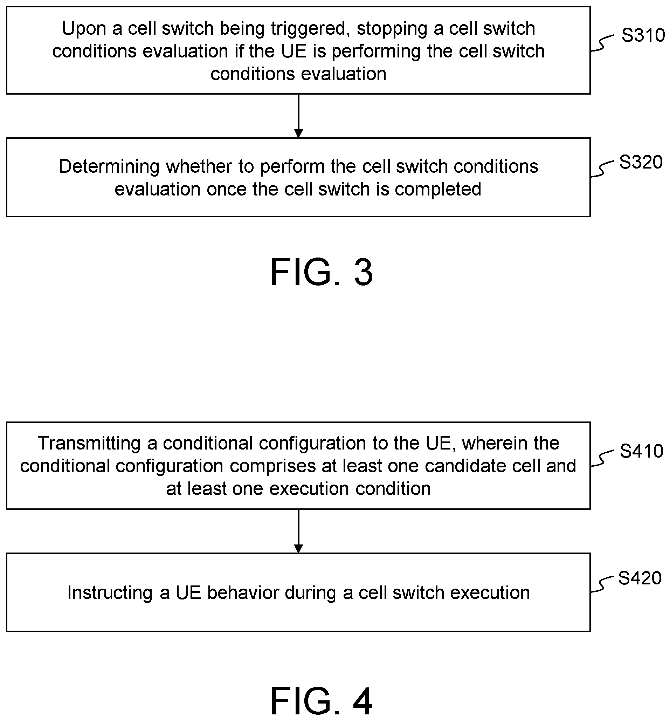

FIG. 3 is a flow chart that illustrates a conditional cell switch method performed by a User Equipment according to an exemplary embodiment of the present disclosure.

Referring to FIG. 3, in an embodiment, a method of conditional cell switch applied to a User Equipment (UE) includes the operational framework detailed in steps S310 and S320.

In step S310, upon a cell switch being triggered, the processor 221 stops a cell switch conditions evaluation if the UE is performing the cell switch conditions evaluation.

Specifically, the cell switch being triggered may include receiving a cell switch command via the transceiver 223, or upon fulfillment of at least one execution condition for the cell switch. The cell switch command may be a non-conditional LTM cell switch command issued by a network device, instructing the UE to perform an immediate cell switch to a designated target cell. Alternatively, the cell switch may be triggered when the processor 221 (of the UE) determines that execution conditions for conditional LTM have been satisfied based on measurement results obtained through the transceiver 223.

In an embodiment, the stopping of cell switch conditions evaluation includes suspending or terminating ongoing measurement activities for candidate cells in a previously received conditional configuration, and ceasing the evaluation process that determines whether execution conditions for conditional cell switches are fulfilled. This preventive mechanism ensures that ongoing cell switch operations are not interrupted by concurrent conditional cell switch triggers, thereby avoiding extended mobility latency that could result from aborting and restarting cell switch procedures.

In step S320, the processor 221 determines whether to perform the cell switch conditions evaluation once the cell switch is completed.

In an embodiment, this determination process includes analyzing whether at least one execution condition is configured within a selected candidate target configuration. The selected candidate target configuration includes a target cell configuration associated with the completed cell switch, which may contain conditional LTM parameters for subsequent mobility operations. When the processor 221 determines that the at least one execution condition is configured within the selected candidate target configuration, the processor 221 performs the cell switch conditions evaluation according to the at least one execution condition once the cell switch is completed.

The execution condition is specifically configured for conditional cell switch evaluation, enabling the UE to continue autonomous mobility decision-making after the current cell switch procedure. This determination mechanism allows the UE to maintain conditional LTM capabilities following successful cell switch operations. The evaluation resumption ensures continued optimization of mobility performance while preserving the conditional configuration for future use.

In an embodiment, the determination of whether "the at least one execution condition is configured within the selected candidate target configuration" includes multiple scenarios based on the relationship between the ongoing cell switch type and the conditional cell switch configuration characteristics. The processor 221 analyzes these scenarios to implement appropriate evaluation management strategies.

In a first exemplary case, the ongoing cell switch is an intra-Centralized Unit (intra-CU) cell switch, and the conditional cell switch configuration is also an intra-CU cell switch configuration. Specifically, when the processor 221 determines that the cell switch is an intra-CU cell switch and the conditional configuration is an intra-CU cell switch configuration, the selected candidate target configuration is determined to contain the at least one execution condition. In this scenario, both the source cell and the target cell belong to the same Centralized Unit, maintaining CU-level continuity throughout the cell switch process. The target cell configuration, serving as the selected candidate target configuration, retains the conditional intra-CU cell switch configuration parameters, including execution conditions for subsequent conditional LTM operations. This configuration preservation enables seamless continuation of conditional evaluation capabilities after cell switch completion, thereby supporting subsequent mobility operations. The processor 221 resumes the cell switch conditions evaluation according to the preserved execution conditions once the intra-CU cell switch is completed, maintaining operational continuity for future autonomous mobility decisions.

In a second exemplary case, the conditional cell switch configuration is an inter-Centralized Unit (inter-CU) cell switch configuration, which remains applicable regardless of whether the ongoing cell switch is intra-CU or inter-CU. When the processor 221 determines that the conditional configuration is an inter-CU cell switch configuration, the selected candidate target configuration is determined to contain the at least one execution condition. In this scenario, the conditional LTM configuration is designed with broader applicability, encompassing mobility operations that span across different Centralized Units. The inter-CU conditional configuration maintains its validity and functionality after both intra-CU and inter-CU cell switch operations, as the configuration parameters are specifically designed to support cross-CU mobility scenarios. The target cell configuration, regardless of its CU affiliation, can accommodate and utilize the inter-CU conditional cell switch configuration, including the associated execution conditions. This enhanced flexibility allows the processor 221 to perform cell switch conditions evaluation according to the inter-CU execution conditions once the cell switch is completed, providing extended mobility management capabilities that transcend CU boundaries. The inter-CU configuration approach ensures robust conditional LTM functionality in heterogeneous network deployments where UE mobility frequently involves transitions between different Centralized Units.

In some embodiments, the processor 221 may utilize group identification mechanisms to distinguish between intra-CU and inter-CU scenarios. Each cell within the communication system may be associated with a group identifier corresponding to its Centralized Unit affiliation. The processor 221 compares the group identifier of the serving cell with the group identifier of the target cell to determine whether the ongoing cell switch constitutes an intra-CU or inter-CU operation. This identification process enables precise application of the appropriate evaluation management strategy based on the determined CU relationship and conditional configuration characteristics.

In another embodiment, when the processor 221 implements measurement suspension protocols as the primary mechanism for stopping cell switch conditions evaluation, the resumption process incorporates systematic measurement reactivation procedures that restore full conditional evaluation capabilities. Specifically, when the processor 221 determines that the ongoing cell switch constitutes an intra-CU operation through group identifier comparison and identifies that the conditional configuration maintains applicability within the target CU environment, the processor 221 implements measurement resumption protocols upon cell switch completion. The measurement resumption process may include, but are not limited to, reactivation of Reference Signal Received Power (RSRP), Reference Signal Received Quality (RSRQ), and Signal to Interference plus Noise Ratio (SINR) monitoring activities for candidate cells specified in the conditional configuration. The processor 221 restores measurement scheduling frameworks according to previously established periodicity parameters, ensuring that measurement collection activities resume with identical operational characteristics to those employed prior to suspension. Additionally, the processor 221 reinitializes measurement filtering and averaging algorithms that enable accurate signal quality assessment for execution condition evaluation purposes. This systematic measurement resumption mechanism ensures seamless restoration of conditional evaluation capabilities while maintaining measurement accuracy and operational consistency essential for reliable autonomous mobility decision-making in subsequent conditional operations.

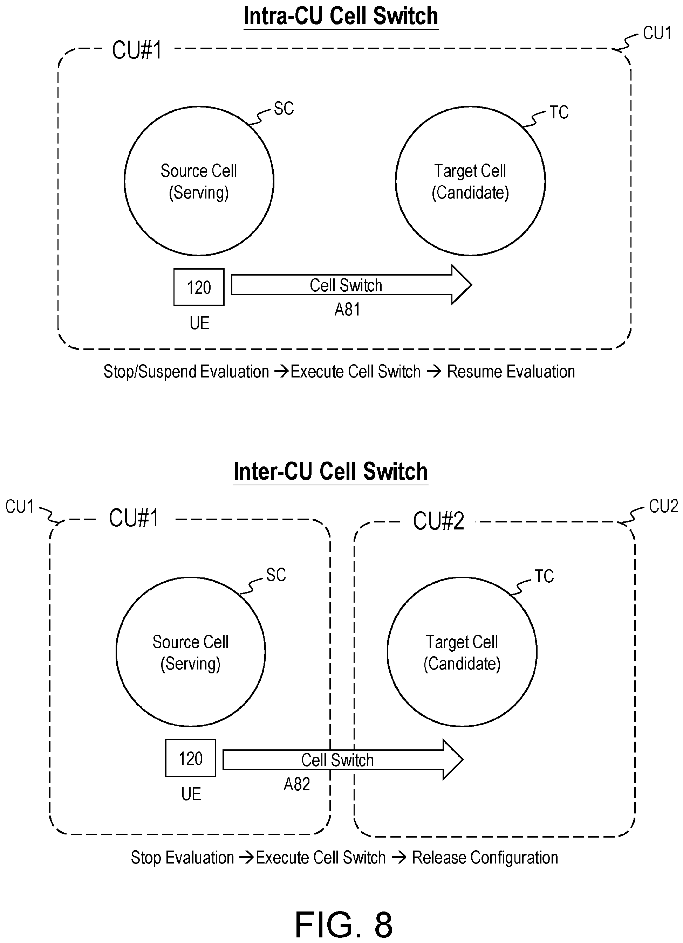

FIG. 8 is a schematic diagram that illustrates intra-CU cell switch and inter-CU cell switch scenarios according to an exemplary embodiment of the present disclosure. Referring to FIG. 8, the conceptual framework demonstrates the operational distinctions between the two exemplary cases described above, providing visual representation of the CU-level relationships and their corresponding evaluation management strategies.

In the upper portion of FIG. 8, the intra-CU cell switch scenario illustrates the first exemplary case where both the source cell SC and target cell TC reside within the same Centralized Unit CU#1. As shown by arrow A81, the UE 120 performs cell switch operation while maintaining CU-level continuity throughout the mobility process. The operational sequence follows a "Stop/Suspend Evaluation → Execute Cell Switch → Resume Evaluation" pattern, where the processor 221 temporarily suspends the cell switch conditions evaluation during the cell switch execution and subsequently resumes the evaluation upon completion. This resume capability is enabled because the target cell configuration retains the conditional intra-CU cell switch configuration parameters, including the execution conditions necessary for subsequent conditional LTM operations. The preservation of evaluation capabilities exemplifies the technical advantage of maintaining CU-level consistency in mobility management operations.

In the lower portion of FIG. 8, the inter-CU cell switch scenario illustrates a different operational paradigm where the source cell SC belongs to a CU CU#1 and the target cell TC belongs to another CU CU#2. As shown by arrow A82, the UE 120 performs cell switch operation across different Centralized Units, necessitating a different evaluation management approach. The operational sequence follows a "Stop Evaluation → Execute Cell Switch → Release Configuration" pattern for intra-CU conditional configurations, where the processor 221 stops the cell switch conditions evaluation and subsequently releases the conditional configuration upon completion of the inter-CU cell switch.

The release of intra-CU conditional configuration in this scenario serves critical technical purposes and provides substantial operational benefits. The release mechanism prevents configuration inconsistencies that could arise when attempting to apply CU-specific parameters across different Centralized Units with potentially divergent architectural characteristics and resource management protocols. By releasing the intra-CU conditional configuration upon inter-CU cell switch completion, the processor 221 eliminates the risk of executing conditional evaluations based on obsolete or incompatible CU-specific parameters, thereby maintaining system stability and preventing erroneous mobility decisions. Furthermore, this selective release approach optimizes memory utilization within the UE 120 by eliminating redundant configuration data that is no longer applicable in the new CU context, while simultaneously preparing the system to receive and implement appropriate conditional configurations compatible with the target CU's operational framework.

In an embodiment, however, when inter-CU conditional configurations are employed, as described in the second exemplary case, the target cell configuration in CU#2 can accommodate and utilize the inter-CU conditional cell switch configuration, enabling continued conditional evaluation capabilities despite the CU transition. This architectural flexibility demonstrates the technical sophistication required to support cross-CU mobility scenarios while maintaining conditional LTM functionality.

The comparative analysis illustrated in FIG. 8 emphasizes the fundamental technical distinction between CU-level operational continuity and cross-CU adaptability. The intra-CU scenario prioritizes seamless evaluation resumption through configuration preservation, while the inter-CU scenario requires either configuration release for intra-CU conditional configurations or enhanced configuration compatibility for inter-CU conditional configurations. This dual-mode operational framework ensures optimal conditional cell switch management across diverse network deployment architectures and mobility patterns.

In an embodiment, the conditional cell switch operation framework includes a preparatory phase that establishes the foundational parameters for autonomous mobility decision-making. Prior to any cell switch being triggered, the processor 221 receives a conditional configuration through the transceiver 223, where the conditional configuration includes at least one candidate cell designated for potential future connectivity. The conditional configuration serves as a comprehensive mobility blueprint, containing essential parameters such as candidate cell identities, measurement parameters, and execution criteria that enable the UE 120 to make autonomous cell switch decisions without requiring continuous network intervention. The processor 221 stores this conditional configuration in the memory 222 for subsequent reference and utilization during mobility operations.

Following the successful reception of the conditional configuration, the processor 221 initiates the performance of cell switch conditions evaluation according to the conditional configuration parameters. This evaluation process includes systematic measurement activities conducted through the transceiver 223, where the processor 221 monitors signal quality indicators, reference signal received power, and other relevant metrics for each candidate cell specified in the conditional configuration. The processor 221 continuously compares these measurement results against the execution conditions defined within the conditional configuration, determining whether any candidate cell satisfies the predefined criteria for conditional cell switch execution. This ongoing evaluation mechanism enables proactive mobility management, allowing the UE 120 to identify optimal cell switch opportunities before connectivity degradation occurs, thereby enhancing overall system performance and user experience.

In another embodiment, the conditional configuration management includes dynamic updating capabilities where the processor 221 may receive multiple conditional configurations corresponding to different mobility scenarios or network deployment characteristics. Each conditional configuration may specify distinct sets of candidate cells and associated execution conditions, enabling the processor 221 to adapt evaluation strategies based on current network conditions and UE mobility patterns. The processor 221 maintains concurrent evaluation processes for multiple conditional configurations when applicable, optimizing mobility decision-making across diverse network environments and usage scenarios.

In an embodiment, the determination mechanism for execution condition configuration includes analysis of Centralized Unit relationships and conditional configuration characteristics. When evaluating whether execution conditions are configured within the selected candidate target configuration, the processor 221 performs a comprehensive assessment of the CU-level operational context. Specifically, the processor 221 determines that the at least one execution condition is configured within the selected candidate target configuration by identifying that the cell switch constitutes an intra-Centralized Unit cell switch and confirming that the conditional configuration is designed as an intra-CU cell switch configuration. This determination process involves comparing CU identifiers associated with the source cell and target cell, confirming their shared CU affiliation, and verifying that the conditional configuration parameters are compatible with intra-CU operational requirements. The successful identification of this intra-CU scenario enables the processor 221 to maintain conditional evaluation capabilities following cell switch completion, supporting subsequent mobility operations within the same Centralized Unit framework.

In an embodiment, the processor 221 implements an alternative determination approach for execution condition configuration that accommodates cross-CU mobility scenarios. The processor 221 determines that the at least one execution condition is configured within the selected candidate target configuration by identifying that the conditional configuration is designed as an inter-Centralized Unit cell switch configuration. This determination process focuses on the inherent characteristics of the conditional configuration rather than the specific CU relationship between source and target cells. Inter-CU conditional configurations are engineered with enhanced compatibility features that enable functional operation across different Centralized Units, regardless of whether the ongoing cell switch involves intra-CU or inter-CU transitions. The processor 221 recognizes these inter-CU configuration characteristics and confirms their applicability to the target cell configuration, enabling continued conditional evaluation capabilities even when cell switch operations traverse CU boundaries.

In a further embodiment, the processor 221 implements configuration lifecycle management that includes selective release mechanisms for maintaining system optimization and preventing configuration conflicts. When the processor 221 determines that the cell switch constitutes an inter-Centralized Unit cell switch and identifies that the conditional configuration is designed as an intra-Centralized Unit cell switch configuration, the processor 221 releases the conditional configuration once the cell switch is completed. This release operation involves systematic deactivation of the intra-CU conditional configuration parameters, including deletion of associated execution conditions, candidate cell information, and measurement parameters that are no longer applicable in the new CU context. The release mechanism prevents potential operational conflicts that could arise from attempting to utilize CU-specific configuration parameters across different Centralized Units with distinct architectural characteristics and operational protocols. By implementing this selective release approach, the processor 221 ensures system stability, optimizes memory utilization, and prepares the UE 120 to receive appropriate conditional configurations compatible with the target CU's operational framework.

In a further embodiments, the principles of suspending and resuming or releasing conditional configurations are also applicable when the ongoing cell switch is a legacy Layer 3 (L3) handover (HO) or a conditional handover (CHO). The management of the conditional LTM evaluation process is adapted based on the CU-level characteristics of the handover, mirroring the logic applied to LTM operations.

Specifically, when the processor 221 determines that the ongoing cell switch is a non-conditional handover (HO) triggered by a network command, the processor 221 analyzes the CU affiliation of the target cell specified in the HO command. If the handover is an intra-CU handover, where the target cell resides within the same Centralized Unit as the source cell, the processor 221 suspends the conditional LTM conditions evaluation upon receiving the HO command and resumes the evaluation upon successful completion of the handover. This ensures that the still-valid intra-CU conditional LTM configuration can be utilized for subsequent mobility.

Conversely, if the processor 221 determines that the handover is an inter-CU handover, the processor 221 stops the conditional LTM conditions evaluation upon receiving the HO command. If the existing conditional LTM configuration is an intra-CU configuration, the processor 221 releases this configuration upon handover completion, as it is no longer applicable in the new CU context. This consistent application of evaluation management logic across different cell switch types, including both LTM and legacy HO, ensures robust and predictable mobility behavior, enhancing overall system stability and performance.

Furthermore, when the ongoing cell switch is a conditional handover (CHO) initiated by the UE itself, the timing of the suspension is precisely aligned with the autonomous trigger. In this scenario, the processor 221 suspends or stops the conditional LTM conditions evaluation upon the fulfillment of the execution condition that triggers the current CHO execution. For an intra-CU CHO, the processor 221 suspends the evaluation and subsequently resumes it upon completion of the handover. For an inter-CU CHO with an intra-CU conditional LTM configuration, the processor 221 stops the evaluation and releases the configuration upon completion. This differentiated timing based on the handover trigger (network-commanded vs. UE-autonomous) demonstrates a sophisticated level of control that optimizes the evaluation management for each specific mobility scenario.

In an embodiment, the mechanism for stopping cell switch conditions evaluation includes a comprehensive measurement suspension strategy that addresses the foundational layer of conditional evaluation operations. Specifically, stopping the cell switch conditions evaluation includes stopping measurement for the at least one candidate cell in the conditional configuration upon the cell switch.

In an embodiment, the processor 221 implements this measurement suspension by instructing the transceiver 223 to cease measurement activities for all candidate cells specified within the previously received conditional configuration during the ongoing cell switch execution period. This measurement cessation encompasses various signal quality indicators that are typically monitored for each candidate cell to support conditional evaluation processes. Such indicators may include, but are not limited to, Reference Signal Received Power (RSRP), Reference Signal Received Quality (RSRQ), and Signal to Interference plus Noise Ratio (SINR). By stopping these fundamental measurement operations, the processor 221 effectively prevents the generation of new measurement results that could potentially trigger additional conditional cell switch operations during the ongoing cell switch execution, thereby ensuring operational stability and avoiding mobility latency extension.

In some embodiments, the measurement suspension includes intelligent resource management where the processor 221 temporarily reallocates measurement resources previously dedicated to conditional candidate cells toward supporting the ongoing cell switch operation. This resource optimization approach enables enhanced measurement accuracy for the target cell during the cell switch execution process, potentially improving cell switch success rates and reducing overall mobility latency. The processor 221 coordinates this resource reallocation through sophisticated scheduling algorithms that prioritize cell switch-critical measurements while maintaining measurement suspension for conditional candidate cells until the cell switch completion.

From the network device perspective, the present disclosure establishes a comprehensive management framework for coordinating conditional cell switch operations across distributed User Equipment within wireless communication networks. The network device assumes a central orchestration role, proactively configuring UE mobility parameters while simultaneously defining behavioral protocols that govern UE operational responses during concurrent cell switch scenarios. This network-centric approach enables systematic control over mobility management strategies, allowing network operators to optimize resource allocation, minimize interference from competing mobility events, and ensure consistent implementation of conditional evaluation policies across heterogeneous network deployments. The network device framework addresses the fundamental challenge of maintaining operational coherence when multiple mobility mechanisms operate simultaneously, providing standardized behavioral instructions that prevent conflicting mobility decisions and ensure optimal system-wide performance.

FIG. 4 is a flow chart that illustrates a method performed by a network device for managing conditional cell switch operations according to an exemplary embodiment of the present disclosure. Referring to FIG. 4, in an embodiment, a method performed by a network device for managing conditional cell switch of a User Equipment (UE) includes the operational framework detailed in steps S410 and S420, establishing comprehensive network-side control mechanisms for conditional mobility management.

Specifically, in step S410, the processor 221 of the network device transmits a conditional configuration to the UE via the transceiver 223, wherein the conditional configuration includes at least one candidate cell and at least one execution condition. The conditional configuration serves as a comprehensive mobility blueprint that enables autonomous UE decision-making while maintaining network-level oversight and control. The at least one candidate cell specified within the conditional configuration represents pre-selected target cells that have been evaluated by the network device as suitable mobility destinations based on network topology, resource availability, and quality of service requirements. Each candidate cell is associated with specific parameters including cell identity, frequency information, and measurement configuration details that enable the UE to perform appropriate signal quality assessments. The at least one execution condition defines the specific criteria that must be satisfied to trigger conditional cell switch operations. These criteria may be based on various factors, including, for example, signal strength thresholds, signal quality parameters, timing constraints, or any other measurable condition relevant to mobility decisions. The processor 221 customizes these execution conditions based on current network load conditions, UE mobility patterns, and service requirements to optimize overall system performance.

Next, in step S420, the processor 221 instructs a UE behavior during a cell switch execution, providing explicit operational guidance that governs UE responses when cell switch operations are triggered.

This instruction mechanism enables the network device to implement coordinated mobility management strategies that prevent operational conflicts and ensure consistent behavior across multiple UE devices.

In an embodiment, the UE behavior instructions may include directives for stopping cell switch conditions evaluation during cell switch execution, stopping measurement activities for candidate cells specified in the conditional configuration, or implementing alternative evaluation management approaches that maintain measurement continuity while preventing conditional trigger conflicts.

In an embodiment, the processor 221 may also instruct UE behavior that includes ignoring condition fulfillment while continuing cell switch conditions evaluation during cell switch execution, or further storing information of candidate cells having fulfilled corresponding execution conditions for potential failure handling applications. These behavioral instructions enable sophisticated mobility management strategies that adapt to specific network deployment characteristics and operational requirements. The processor 221 transmits these behavioral instructions through dedicated signaling mechanisms via the transceiver 223, ensuring reliable delivery and implementation of network-directed mobility policies.

In an embodiment, the network device implements conditional evaluation resumption protocols that accommodate intra-Centralized Unit operational continuity requirements. The processor 221 instructs UE behavior that includes performing the cell switch conditions evaluation once the cell switch is completed specifically when the cell switch constitutes an intra-Centralized Unit cell switch and the conditional configuration is designed as an intra-CU cell switch configuration. This instructional framework recognizes the architectural advantages inherent in maintaining CU-level operational consistency throughout mobility procedures. The processor 221 determines the appropriateness of evaluation resumption by analyzing the CU relationship between source and target cells, confirming their shared CU affiliation, and verifying the compatibility of the conditional configuration with continued intra-CU operations. When these conditions are satisfied, the processor 221 transmits explicit behavioral instructions via the transceiver 223, directing the UE to reinitiate conditional evaluation processes upon cell switch completion. This resumption capability enables seamless continuation of autonomous mobility management functions while preserving the conditional configuration parameters that remain applicable within the consistent CU operational framework. The instructional approach ensures optimal resource utilization and maintains subsequent mobility capabilities.

In another embodiment, the network device implements enhanced cross-CU compatibility instructions that leverage the inherent flexibility of inter-Centralized Unit conditional configurations. The processor 221 instructs UE behavior that includes performing the cell switch conditions evaluation once the cell switch is completed when the conditional configuration is designed as an inter-Centralized Unit cell switch configuration, regardless of whether the executed cell switch involves intra-CU or inter-CU transitions. This universal applicability instruction recognizes the sophisticated engineering characteristics of inter-CU conditional configurations, which are specifically designed to maintain functional compatibility across diverse CU operational environments. The processor 221 evaluates the conditional configuration characteristics during the instruction formulation process, identifying inter-CU configuration parameters and confirming their broad-spectrum applicability. The resulting behavioral instructions transmitted via the transceiver 223 enable the UE to continue conditional evaluation activities following cell switch completion, leveraging the robust cross-CU compatibility features embedded within the inter-CU conditional configuration design. This instructional strategy improves mobility management flexibility while ensuring consistent operational performance across heterogeneous network deployments with varying CU architectural implementations.

In a further embodiment, the network device implements selective configuration lifecycle management instructions that prevent operational conflicts arising from CU architectural transitions. The processor 221 instructs UE behavior that includes releasing the conditional configuration once the cell switch is completed when the cell switch constitutes an inter-Centralized Unit cell switch and the conditional configuration is designed as an intra-Centralized Unit cell switch configuration. This release instruction addresses the fundamental architectural incompatibility between intra-CU configuration parameters and inter-CU operational environments, preventing potential system instabilities that could result from attempting to apply CU-specific parameters across different Centralized Units. The processor 221 identifies this incompatibility scenario by analyzing both the CU transition characteristics of the executed cell switch and the CU-specific design limitations of the conditional configuration. Upon detecting this architectural mismatch, the processor 221 transmits precise behavioral instructions via the transceiver 223, directing the UE to systematically deactivate and release the incompatible conditional configuration following cell switch completion. This release mechanism ensures system stability, prevents erroneous mobility decisions based on obsolete configuration data, and optimizes memory resource utilization within the UE while preparing the operational framework for potential deployment of compatible conditional configurations suited to the target CU environment.

In an embodiment, the failure handling mechanism leverages stored candidate cell information to provide immediate recovery options when primary cell switch operations encounter execution failures. The processor 221 implements UE behavior that includes utilizing the stored information of the candidate cells for failure handling when the cell switch execution fails, establishing a robust backup mobility framework that minimizes service disruption and reduces recovery latency. During the cell switch execution period, when the processor 221 continues cell switch conditions evaluation and identifies candidate cells having fulfilled corresponding execution conditions, the processor 221 systematically stores identification parameters, signal quality metrics, and execution condition fulfillment timestamps for these qualified candidate cells in the memory 222. Upon detecting cell switch execution failure through unsuccessful access attempts, timeout conditions, or explicit failure signaling from network infrastructure, the processor 221 immediately retrieves the stored candidate cell information and initiates alternative cell switch attempts to the stored candidate cells in priority order. This failure handling approach eliminates the need for legacy cell selection procedures that would require comprehensive network scanning and measurement collection following failure detection, thereby providing immediate recovery capabilities and maintaining service continuity. The processor 221 sequentially attempts cell switch operations to each stored candidate cell until successful connection establishment or exhaustion of available backup options, after which traditional failure recovery mechanisms may be invoked if necessary.

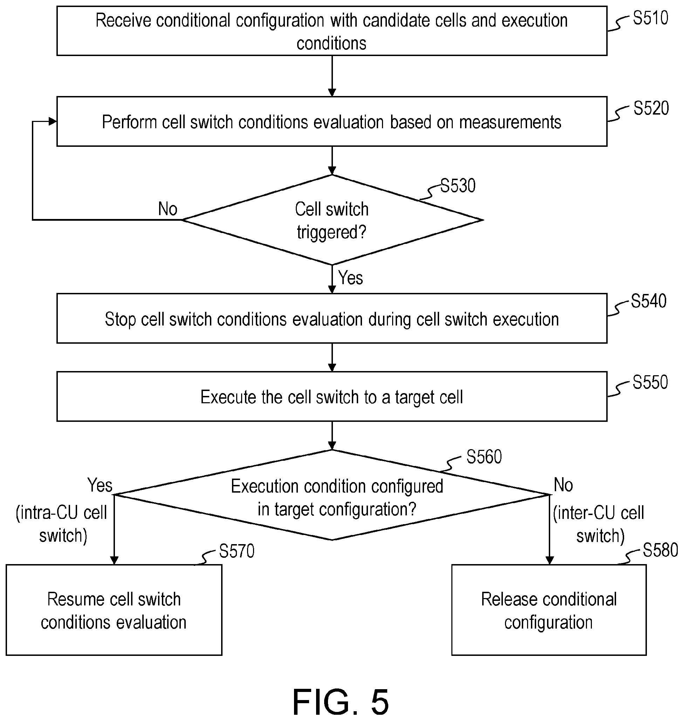

FIG. 5 is a flow chart that illustrates conditional cell switch operations with decision processes for resuming evaluation or releasing configuration according to an exemplary embodiment of the present disclosure. Referring to FIG. 5, in an embodiment, the comprehensive operational framework demonstrates the systematic progression from initial configuration reception through conditional evaluation management and post-completion decision-making processes.

In step S510, the processor 221 receives conditional configuration with candidate cells and execution conditions via the transceiver 223, establishing the foundational parameters for autonomous mobility management. This initial configuration reception includes comprehensive mobility parameters specifying candidate cell identities, measurement parameters, execution criteria, and CU-level operational characteristics that enable subsequent autonomous decision-making processes. The processor 221 stores the received conditional configuration in the memory 222 and initializes measurement and evaluation frameworks according to the specified parameters.

Next, in step S520, the processor 221 performs cell switch conditions evaluation based on measurements, implementing continuous monitoring of candidate cell quality and systematic comparison against execution conditions. This evaluation process creates a feedback loop where the processor 221 continuously assesses measurement results to determine whether any candidate cell satisfies the predefined execution criteria for conditional cell switch execution. The evaluation cycle continues until either cell switch triggering conditions are satisfied or external cell switch commands are received.

Next, in step S530, the processor 221 determines whether a cell switch has been triggered through either autonomous conditional evaluation or network-directed commands.

In an embodiment, when no cell switch triggering occurs, the operational flow returns to step S520 for continued evaluation activities. Upon positive cell switch triggering determination, the processor 221 proceeds to step S540 for evaluation management implementation.

In step S540, the processor 221 stops cell switch conditions evaluation during cell switch execution, implementing the core protective mechanism that prevents conditional cell switch triggers from interrupting ongoing cell switch operations. This evaluation suspension encompasses both measurement activities and condition assessment processes, ensuring operational stability throughout the cell switch execution period.

Next, in step S550, the processor 221 executes the cell switch to a target cell, implementing the mobility procedure that establishes connectivity with the designated target cell. This execution process includes access procedures necessary for successful cell switch completion.

Next, in step S560, the processor 221 determines whether execution conditions are configured within the target configuration, implementing the critical decision point that governs post-completion evaluation management. This determination process analyzes the relationship between the completed cell switch characteristics and the conditional configuration parameters to identify appropriate subsequent actions.

In step S570, when execution conditions are determined to be configured within the target configuration (typically corresponding to intra-CU cell switch scenarios), the processor 221 resumes cell switch conditions evaluation, restoring autonomous mobility capabilities and enabling subsequent conditional operations. This resumption maintains operational continuity and supports subsequent mobility.

In step S580, when execution conditions are determined not to be configured within the target configuration (typically corresponding to inter-CU cell switch scenarios with intra-CU conditional configurations), the processor 221 releases the conditional configuration, implementing systematic deactivation of incompatible configuration parameters and optimizing memory resource utilization. This release mechanism prevents operational conflicts and prepares the system for potential deployment of compatible conditional configurations suited to the new operational environment.

It should be mentioned that, in alternative embodiments, the present disclosure provides more aggressive evaluation management strategies that maintain conditional evaluation continuity without compromising ongoing cell switch operations. These advanced approaches recognize that complete evaluation suspension, while effective for preventing interference, may result in lost opportunities for mobility optimization and failure recovery preparation. The alternative framework enables the processor 221 to continue cell switch conditions evaluation activities during cell switch execution while implementing intelligent control mechanisms that prevent conditional triggers from disrupting ongoing mobility procedures. This continuation-based approach leverages the technical principle that evaluation activities and cell switch triggering represent distinct operational phases that can be decoupled through specific control logic. The processor 221 maintains measurement and evaluation capabilities throughout cell switch execution periods while implementing selective response inhibition that preserves evaluation results without permitting autonomous cell switch initiation. This methodology enables advanced mobility management strategies including proactive backup preparation, enhanced failure recovery capabilities, and continuous network optimization while maintaining the fundamental protection against concurrent mobility conflicts.

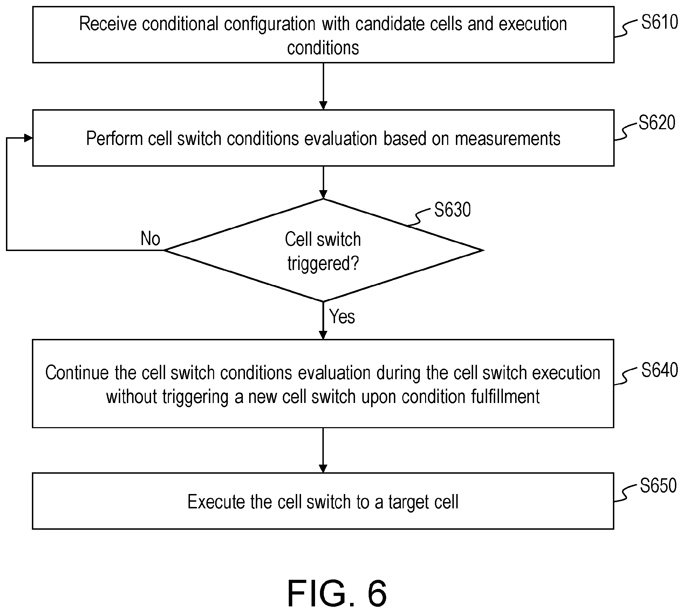

FIG. 6 is a flow chart that illustrates continuing cell switch conditions evaluation during cell switch execution without triggering new cell switches according to an exemplary embodiment of the present disclosure. Referring to FIG. 6, in an embodiment, this alternative operational framework demonstrates advanced evaluation management that maintains measurement continuity while preventing operational interference through selective trigger suppression mechanisms.

In step S610, the processor 221 receives conditional configuration with candidate cells and execution conditions, establishing the foundational framework for continuous evaluation operations. This configuration reception encompasses comprehensive mobility parameters that enable sustained evaluation activities throughout subsequent cell switch operations.

In step S620, the processor 221 performs cell switch conditions evaluation based on measurements, implementing continuous monitoring that persists regardless of concurrent cell switch activities. This evaluation continuity enables real-time assessment of candidate cell conditions and maintains current awareness of mobility opportunities throughout the operational cycle. The evaluation cycle continues until either cell switch triggering conditions are satisfied or external cell switch commands are received.

In step S630, the processor 221 determines whether a cell switch has been triggered through either autonomous conditional evaluation or network-directed commands. Upon negative determination, the evaluation cycle continues uninterrupted in step S620.

In step S640, upon a cell switch is triggered, the processor 221 continues the cell switch conditions evaluation during the cell switch execution without triggering a new cell switch upon condition fulfillment. This control mechanism represents the core innovation of this alternative approach, enabling evaluation persistence while implementing intelligent trigger suppression. The processor 221 maintains all measurement and assessment activities for candidate cells specified in the conditional configuration, continuously monitoring signal quality indicators and comparing measurement results against execution conditions. However, when execution conditions are satisfied during the cell switch execution period, the processor 221 implements selective response inhibition that acknowledges condition fulfillment without initiating corresponding cell switch procedures. This approach preserves valuable evaluation information while ensuring that ongoing cell switch operations proceed without interference from conditional cell switch triggers. The continued evaluation capability enables enhanced situational awareness and prepares the system for immediate resumption of full conditional functionality upon cell switch completion.

In step S650, the processor 221 executes the cell switch to a target cell, completing the mobility procedure while maintaining evaluation continuity throughout the execution process. The combination of continued evaluation and successful cell switch execution demonstrates the technical feasibility of parallel operation management without operational conflicts.

In various embodiments, the implementation of this trigger suppression mechanism is adapted to the specific triggering characteristics of the ongoing cell switch. The period during which the processor 221 ignores the condition fulfillment is precisely defined to align with the duration of the cell switch execution for different mobility scenarios.

For non-conditional cell switch operations, such as a non-conditional LTM or a non-conditional HO initiated by a network command, the processor 221 begins to ignore any condition fulfillment upon reception of the cell switch command. This state of selective response inhibition is maintained until the non-conditional cell switch procedure is completed.

For conditional cell switch operations, such as a conditional LTM or a conditional HO (CHO) initiated by the UE itself, the processor 221 begins to ignore any further condition fulfillment upon the fulfillment of the execution condition that triggers the current cell switch execution. This state is maintained until the ongoing conditional cell switch procedure is completed. This differentiated timing ensures that the protection against concurrent triggers is activated at the precise moment the UE commits to a mobility procedure, whether network-directed or autonomous.

Upon the completion of the cell switch in step S650, the processor 221 may also implement post-completion management of the conditional configuration. In an intra-CU cell switch scenario, the processor 221 may resume the triggering capability, meaning it will subsequently initiate a new cell switch if an execution condition is fulfilled. In an inter-CU cell switch scenario where the conditional configuration was for intra-CU mobility, the processor 221 may release the conditional configuration, consistent with the logic described in FIG. 5.

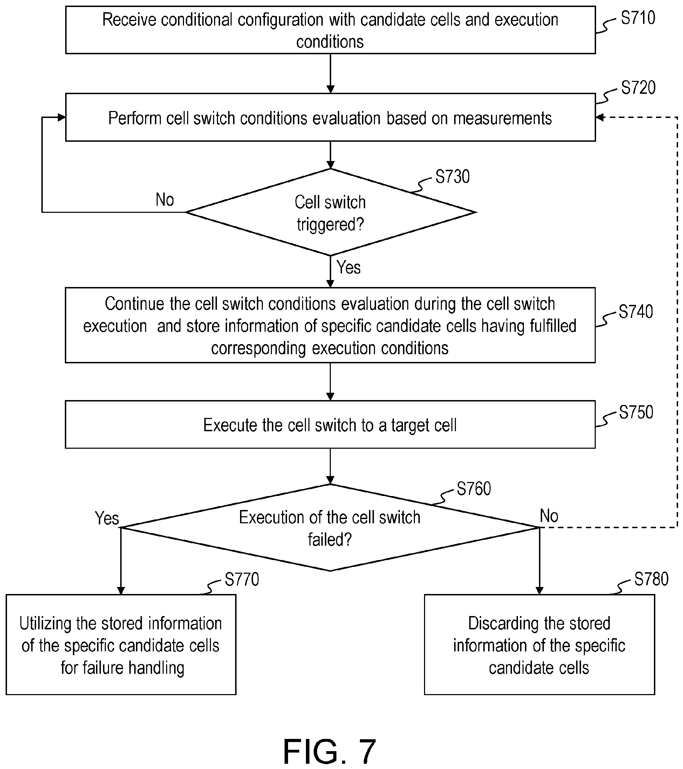

FIG. 7 is a flow chart that illustrates storing information of candidate cells during cell switch execution for failure handling according to an exemplary embodiment of the present disclosure. Referring to FIG. 7, in an embodiment, this advanced operational framework demonstrates comprehensive backup preparation strategies that leverage continued evaluation activities to establish robust failure recovery mechanisms.

In step S710, the processor 221 receives conditional configuration with candidate cells and execution conditions, establishing the operational foundation for advanced evaluation and storage management. This configuration provides the candidate cell parameters and execution criteria necessary for both ongoing evaluation and selective information storage operations.

In step S720, the processor 221 performs cell switch conditions evaluation based on measurements, implementing continuous assessment activities that support both standard conditional operations and advanced backup preparation functions. This evaluation process maintains comprehensive monitoring of all candidate cells throughout operational cycles, including periods of concurrent cell switch execution. The evaluation cycle continues until either cell switch triggering conditions are satisfied or external cell switch commands are received.

In step S730, the processor 221 determines whether a cell switch has been triggered through either autonomous conditional evaluation or network-directed commands. When no triggering occurs, the process continues to step S720 for subsequent cell switch conditions evaluation.

In step S740, the processor 221 continues the cell switch conditions evaluation during the cell switch execution and stores information of specific candidate cells having fulfilled corresponding execution conditions.

Specifically, this dual-function operation represents sophisticated resource management that combines evaluation continuity with proactive backup preparation. The processor 221 maintains comprehensive measurement and assessment activities while implementing systematic storage of qualified candidate cell information in the memory 222. The stored information includes candidate cell identification parameters, signal quality metrics, execution condition fulfillment timestamps, and priority rankings that enable efficient failure recovery implementation. This storage mechanism operates selectively, capturing only candidate cells that satisfy execution conditions during the cell switch execution period, thereby optimizing memory utilization while maximizing backup effectiveness. The processor 221 implements dynamic storage management that can accommodate multiple storage strategies including single candidate preservation, comprehensive candidate archiving, or limited quantity storage with priority-based selection criteria.

It should be noted that, in a specific embodiment, the dynamic storage management implements optimized resource utilization through selective preservation of superior candidate cell information. The processor 221 maintains storage for only the current optimal candidate cell that satisfies execution conditions during the cell switch execution period, implementing dynamic replacement protocols that continuously update stored information when superior candidates are identified. Specifically, when the processor 221 initially identifies a candidate cell satisfying execution conditions, the processor 221 stores the corresponding candidate cell information including signal quality metrics and execution condition fulfillment parameters in the memory 222. Subsequently, when the processor 221 identifies additional candidate cells satisfying execution conditions, the processor 221 performs comparative analysis between the newly identified candidate cell and the currently stored candidate cell based on predetermined quality criteria such as signal strength, signal quality, or combined performance indicators. When the newly identified candidate cell demonstrates superior characteristics compared to the currently stored candidate cell, the processor 221 replaces the stored information with the superior candidate cell parameters, maintaining only the optimal backup option at any given time. This dynamic replacement mechanism ensures that stored information represents the highest quality backup candidate available while minimizing memory resource consumption and optimizing failure recovery effectiveness through preservation of the most promising connectivity alternative.

In another embodiment, the dynamic storage management implements a comprehensive archiving strategy where the processor 221 stores all candidate cells that satisfy their corresponding execution conditions during the cell switch execution period. In this approach, the processor 221 assigns a ranking number to each stored candidate cell based on its signal quality or other performance metrics. When a new candidate cell fulfills its execution condition, the processor 221 compares it with the already stored cells and inserts it into the ranked list. This method provides a complete set of backup options, allowing the failure handling mechanism in step S770 to sequentially attempt connection to the stored cells in descending order of their ranking until a successful connection is established.

In yet another embodiment, the storage management operates under a capacity constraint, where the processor 221 stores at most a predetermined number (N) of candidate cells. This approach balances failure recovery robustness with UE memory resource limitations. The processor 221 maintains a ranked list of up to N candidate cells. When a new candidate cell fulfills its execution condition and is determined to have a rank that qualifies it for inclusion in the list, it is stored. If the list already contains N cells, the cell with the lowest rank (i.e., the (N+1)-th cell) is discarded to make space for the new, higher-ranked cell. This ensures that the UE always maintains a list of the top N best-performing backup candidates.

Furthermore, the capability of the UE 120 can influence the scope of candidate cells available for these advanced failure handling mechanisms. For a UE 120 equipped with at least two receivers, the processor 221 can concurrently perform measurements on both intra-frequency and inter-frequency candidate cells. This allows the processor 221 to evaluate and store a more diverse set of backup candidates during the cell switch execution, increasing the probability of successful failure recovery across different frequency bands. For other UEs with more limited receiver capabilities, the set of candidate cells considered for storage would be limited to those that can be measured without disrupting the primary cell switch operation.

In step S750, the processor 221 executes the cell switch to a target cell, implementing the primary mobility procedure while maintaining parallel evaluation and storage operations throughout the execution process.

Nrxt, in step S760, the processor 221 determines whether execution of the cell switch failed, implementing failure detection that triggers appropriate response mechanisms based on cell switch outcome assessment. This determination evaluates access success, connectivity establishment, and operational stability to identify cell switch failures requiring backup intervention.

In step S770, when cell switch failure is detected, the processor 221 utilizes the stored information of the specific candidate cells for failure handling, implementing immediate recovery procedures that leverage previously identified backup options. This failure handling mechanism enables rapid recovery through sequential cell switch attempts to stored candidate cells, eliminating the delays associated with comprehensive network scanning and measurement collection following failure detection.

When implementing the single candidate preservation strategy described above, the failure handling mechanism operates with enhanced efficiency through direct utilization of the stored optimal candidate cell information. The processor 221 immediately accesses the stored information representing the current optimal candidate cell that demonstrated superior execution condition fulfillment characteristics during the cell switch execution period, eliminating the need for priority assessment or selection procedures among multiple stored candidates. This streamlined failure recovery approach enables the processor 221 to initiate cell switch attempts directly to the identified optimal candidate cell, maximizing the probability of successful failure recovery through utilization of the highest quality backup option available. The immediate deployment of optimal candidate information reduces failure recovery latency while providing the most promising connectivity alternative based on the dynamic quality assessment performed during the cell switch execution period.

In step S780, when cell switch execution succeeds, the processor 221 discards the stored information of the specific candidate cells, implementing memory optimization that eliminates redundant backup data no longer required for failure recovery.

In an embodiment, this optimization step may be followed by return to step S720 through the dashed line feedback mechanism, enabling continued evaluation for subsequent mobility operations or maintenance of ongoing conditional capabilities. The selective information management ensures efficient resource utilization while maintaining system readiness for future mobility events.

It should be noted that, in another embodiment, the present disclosure implements priority-based cell switch management that enables selective interruption of ongoing cell switch operations when higher priority mobility opportunities become available. This management approach recognizes that certain candidate cells may possess operational characteristics that justify interruption of current cell switch procedures in favor of superior connectivity options. The priority-based framework addresses scenarios where network deployment includes candidate cells with varying service capabilities, signal quality potential, or architectural advantages that warrant differential treatment during mobility decision-making processes. The processor 221 evaluates candidate cell priorities based on network configuration parameters, UE preference settings, or predetermined service quality indicators that enable systematic ranking of mobility options. When higher priority candidates satisfy execution conditions during ongoing cell switch operations, the priority-based management framework permits controlled interruption and redirection to optimize overall connectivity outcomes while maintaining operational stability through structured transition procedures.

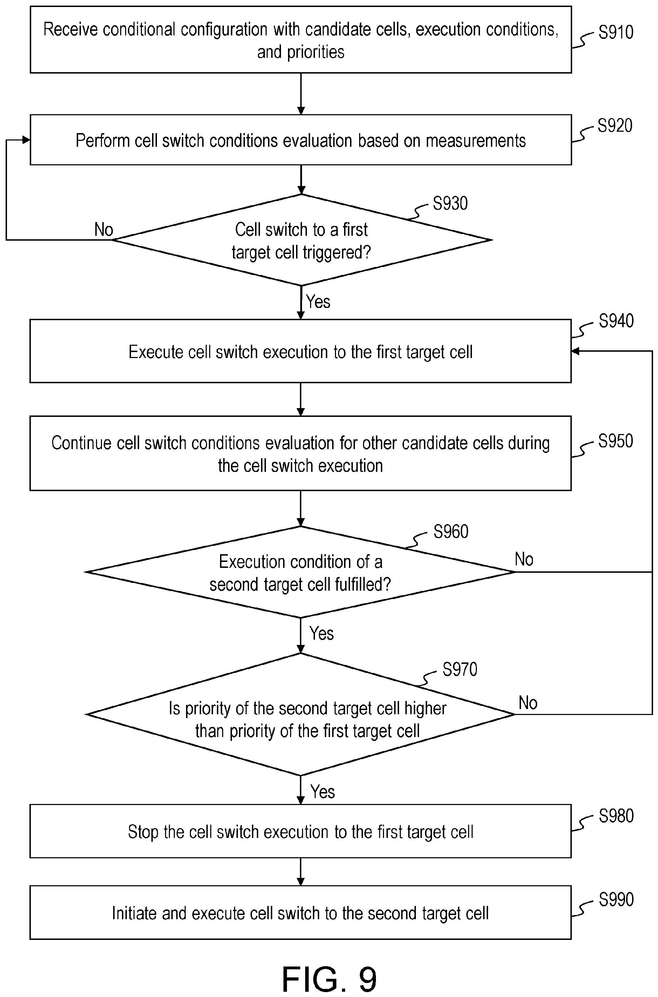

FIG. 9 is a flow chart that illustrates a priority-based cell switch method according to an exemplary embodiment of the present disclosure. Referring to FIG. 9, in an embodiment, this priority-based operational framework demonstrates controlled cell switch interruption and redirection mechanisms that optimize mobility outcomes through systematic priority evaluation and selective procedure modification.

In step S910, the processor 221 receives conditional configuration with candidate cells, execution conditions, and priorities via the transceiver 223. This enhanced configuration includes priority parameters that establish relative ranking among candidate cells, enabling systematic evaluation of mobility option preferences. The priority information may be based on network-defined service quality indicators, CU-level operational characteristics, or Layer 1 versus Layer 3 measurement reliability factors that influence mobility decision-making processes. The processor 221 stores this priority-enhanced configuration in the memory 222 for subsequent reference during evaluation and decision-making operations.

For example, a conditional intra-CU LTM candidate cell may be assigned a higher priority than a conditional inter-CU LTM candidate cell, as intra-CU mobility typically involves lower latency and less signaling overhead. In another example, a conditional handover (CHO) candidate cell, which relies on more robust Layer 3 measurements, may be assigned a higher priority than a conditional LTM candidate cell, which relies on less robust Layer 1 or Layer 2 measurements. These priority assignments allow the UE 120 to make intelligent decisions to interrupt an ongoing, less optimal cell switch in favor of a more stable or efficient mobility opportunity.

Next, in step S920, the processor 221 performs cell switch conditions evaluation based on measurements, implementing continuous monitoring that encompasses priority-aware assessment of candidate cell conditions. This evaluation process maintains awareness of both execution condition fulfillment and relative priority rankings for all candidate cells specified in the conditional configuration.

Next, in step S930, the processor 221 determines whether cell switch to a first target cell has been triggered (e.g., the cell switch is triggered via fulfillment of execution condition regarding the first target cell). Upon negative determination, evaluation activities continue through the feedback loop to step S920. In other words, when the determination yields a negative result, indicating no cell switch triggering event, the processor 221 maintains the evaluation cycle through the feedback loop mechanism, returning to step S920 to maintain the ongoing cell switch conditions evaluation based on measurements.

In step S940, the processor 221 executes cell switch execution to the first target cell, initiating mobility procedures toward the initially identified target while maintaining evaluation capabilities for other candidate cells during the execution period.

Next, in step S950, the processor 221 continues cell switch conditions evaluation for other candidate cells during the cell switch execution, implementing parallel monitoring that enables identification of alternative mobility opportunities that may arise during the ongoing cell switch procedure. This continued evaluation specifically excludes the first target cell currently under cell switch execution while maintaining assessment of remaining candidate cells specified in the conditional configuration.

In step S960, the processor 221 determines whether execution condition of a second target cell(e.g., candidate cell other than the first target cell) has been fulfilled, evaluating whether alternative mobility opportunities have become available during the ongoing cell switch execution period. When no alternative fulfillment occurs, the processor 221 continues the current cell switch execution through the feedback loop to step S940.

Next, in step S970, when execution condition fulfillment is detected for the second target cell, the processor 221 determines whether priority of the second target cell is higher than priority of the first target cell. This priority comparison utilizes the priority parameters established in the conditional configuration to evaluate whether the newly identified mobility opportunity warrants interruption of the current cell switch procedure.

When the priority comparison in step S970 yields a negative result, indicating that the second target cell does not possess higher priority than the first target cell, the processor 221 maintains the ongoing cell switch execution to the first target cell without implementing interruption procedures. This continuation protocol ensures that the current cell switch operation proceeds to completion while preserving the priority-based decision framework that prevents unnecessary interruptions for lower or equivalent priority mobility opportunities. The processor 221 returns to the evaluation loop through step S950, continuing cell switch conditions evaluation for other candidate cells during the ongoing cell switch execution, thereby maintaining awareness of additional mobility opportunities that may arise with appropriate priority characteristics to warrant consideration for potential interruption decisions.

In step S980, when the second target cell priority exceeds the first target cell priority, the processor 221 stops the cell switch execution to the first target cell, implementing controlled termination of the current mobility procedure. This interruption mechanism ensures systematic cessation of ongoing cell switch activities while preserving system stability and preventing operational conflicts.

Next, in step S990, the processor 221 initiates and executes cell switch to the second target cell, implementing redirection toward the higher priority mobility option. This redirection procedure establishes connectivity with the superior candidate cell while ensuring seamless transition from the interrupted cell switch operation. The priority-based redirection mechanism enables optimization of mobility outcomes through systematic preference for higher quality or more suitable connectivity options while maintaining operational coherence throughout the transition process. It should be noted that the cell switch to the first target cell and the cell switch to the second target cell are both conditional cell switches.

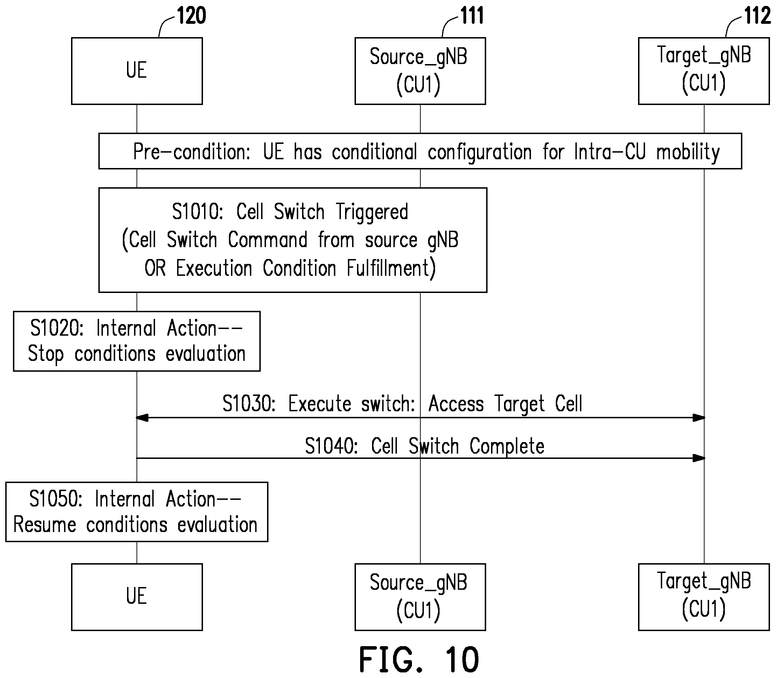

FIG. 10 is a sequence diagram that illustrates an intra-CU cell switch operation with conditional configuration management according to an exemplary embodiment of the present disclosure. Referring to FIG. 10, in an embodiment, this sequence diagram demonstrates the systematic coordination between UE 120, source gNB 111 (CU1), and target gNB 112 (CU1) during intra-Centralized Unit cell switch operations that maintain conditional configuration continuity through evaluation suspension and resumption protocols.

The operational sequence commences with a pre-condition state where UE 120 maintains conditional configuration for intra-CU mobility, indicating that the processor 221 has previously received and stored conditional configuration parameters via the transceiver 223 that specifically support mobility operations within the same Centralized Unit framework. This pre-condition establishes the foundation for subsequent evaluation management decisions that preserve conditional configuration applicability throughout the cell switch procedure.

In step S1010, cell switch triggering occurs through either network-directed commands or autonomous UE-initiated procedures based on conditional evaluation results. For network-directed triggering, source gNB 111 transmits a cell switch command to UE 120 via wireless communication protocols, directing the UE 120 to perform cell switch to target gNB 112. This command represents a non-conditional LTM cell switch instruction that initiates mobility procedures based on network-side decision-making processes. Alternatively, for autonomous triggering, the processor 221 continuously monitors execution conditions for candidate cells specified in the conditional configuration and autonomously triggers cell switch operations when predetermined execution criteria are satisfied. Specifically, when the processor 221 determines through measurement analysis that a candidate cell's signal quality parameters exceed configured thresholds or satisfy execution condition formulas, the processor 221 initiates conditional cell switch procedures without requiring explicit network commands. The processor 221 receives triggering signals through the transceiver 223 (for network commands) or generates triggering decisions internally (for condition fulfillment) and recognizes either triggering mechanism as an activation event for conditional evaluation management protocols.

The dual triggering framework accommodates both network-controlled and UE-autonomous mobility paradigms within a unified operational structure. Network-directed cell switch commands provide centralized mobility control based on comprehensive network optimization strategies, while autonomous conditional triggering enables reduced signaling overhead and enhanced responsiveness to rapidly changing channel conditions.

In step S1020, the processor 221 implements internal action to stop conditions evaluation, executing the core protective mechanism that prevents conditional cell switch triggers during ongoing cell switch execution. This internal action encompasses suspension of measurement activities for candidate cells specified in the conditional configuration and cessation of execution condition assessment processes that could potentially trigger conflicting cell switch operations. The evaluation suspension operates specifically during the cell switch execution period while preserving the conditional configuration parameters in the memory 222 for subsequent utilization.

In an embodiment, the stopping mechanism implemented by the processor 221 operates through differentiated protocols that account for the architectural characteristics of Layer 1 and Layer 3 measurement frameworks within wireless communication systems.

In an embodiment, the stopping mechanism implemented by the processor 221 may be adapted to the architectural characteristics of the measurement framework. For instance, when the conditional configuration specifies execution conditions based on Layer 1 measurements, the processor 221 implements inter-layer communication protocols to inform lower layers to stop the cell switch conditions evaluation. This approach recognizes that Layer 1 measurement activities operate within Layer 1 processing frameworks that require coordinated suspension through standardized inter-layer signaling mechanisms. The processor 221 transmits control directives to lower layer entities responsible for Layer 1 measurement collection and processing, ensuring systematic deactivation of Layer 1measurement activities for candidate cells specified in the conditional configuration. Conversely, when the conditional configuration specifies execution conditions based on Layer 3 measurements, the processor 221 directly stops the cell switch conditions evaluation within its own processing framework without requiring inter-layer coordination. This direct approach leverages the processor's 221 immediate control over Layer 3 measurement and evaluation processes, enabling efficient suspension of higher-layer conditional assessment activities through internal control mechanisms. The differentiated stopping approach ensures optimal resource management and protocol efficiency while maintaining compatibility with diverse measurement framework architectures employed in advanced wireless communication systems.

In step S1030, UE 120 executes the cell switch by establishing connectivity with the designated target cell. The processor 221 initiates connectivity establishment while simultaneously receives and processes response signals from target gNB 112 through the transceiver 223.

In step S1040, UE 120 signals cell switch complete to target gNB 112, formally concluding the mobility procedure and establishing operational connectivity with the target cell. This completion notification indicates that the cell switch execution has been successfully finalized and triggers the evaluation of post-completion conditional configuration management requirements.

In step S1050, the processor 221 implements internal action to resume conditions evaluation, restoring conditional evaluation capabilities based on the determination that execution conditions remain configured within the target configuration. Since both source gNB 111 and target gNB 112 operate within the same Centralized Unit (CU1), the intra-CU operational continuity enables preservation of conditional configuration applicability following cell switch completion. The processor 221 reactivates measurement activities for candidate cells specified in the conditional configuration and resumes execution condition assessment processes, enabling continued autonomous mobility decision-making capabilities for subsequent cell switch operations. This resumption capability exemplifies the technical advantage of intra-CU cell switch operations in maintaining conditional configuration continuity and supporting subsequent mobility operations.

In an embodiment, the resumption process implements systematic reactivation of conditional evaluation frameworks according to subsequent mobility requirements. Specifically, the processor 221 reinitializes measurement scheduling protocols for candidate cells specified in the preserved conditional configuration, restoring Layer 1 and Layer 3 measurement collection activities that enable continued execution condition assessment. The processor 221 validates the integrity of stored conditional configuration parameters, confirming that candidate cell identities, execution thresholds, and measurement criteria remain applicable within the target CU operational environment. Upon successful validation, the processor 221 reestablishes evaluation periodicity and measurement reporting frameworks that enable autonomous detection of subsequent mobility opportunities. This systematic resumption mechanism ensures seamless transition from suspended to active conditional evaluation states while maintaining compatibility with the target cell's operational protocols and preserving the autonomous mobility decision-making capabilities essential for subsequent conditional LTM operations.

In an embodiment, the resumption mechanism implements systematic reactivation protocols that align with the specific measurement framework characteristics established during the initial conditional configuration phase. When the processor 221 determines that at least one execution condition for conditional cell switch evaluation is based on Layer 1 measurements, the processor 221 implements inter-layer communication protocols to inform lower layers to reinitiate the cell switch conditions evaluation. This resumption approach involves transmission of control directives to lower layer entities, instructing restoration of Layer 1 measurement collection activities for candidate cells specified in the conditional configuration according to previously established measurement parameters and scheduling protocols. The processor 221 coordinates this reactivation through standardized inter-layer signaling mechanisms that ensure proper synchronization between higher-layer evaluation processes and lower-layer measurement activities. Alternatively, when the processor 221 determines that the at least one execution condition is based on Layer 3 measurements, the processor 221 directly re-initiates the cell switch conditions evaluation within its own processing framework. This direct resumption approach enables immediate restoration of Layer 3 measurement and evaluation activities through internal control mechanisms, reactivating execution condition assessment processes for candidate cells without requiring inter-layer coordination delays. The systematic resumption framework ensures seamless transition from suspended to active conditional evaluation states while maintaining architectural compatibility with diverse measurement implementations and preserving the autonomous mobility decision-making capabilities essential for subsequent conditional operations.

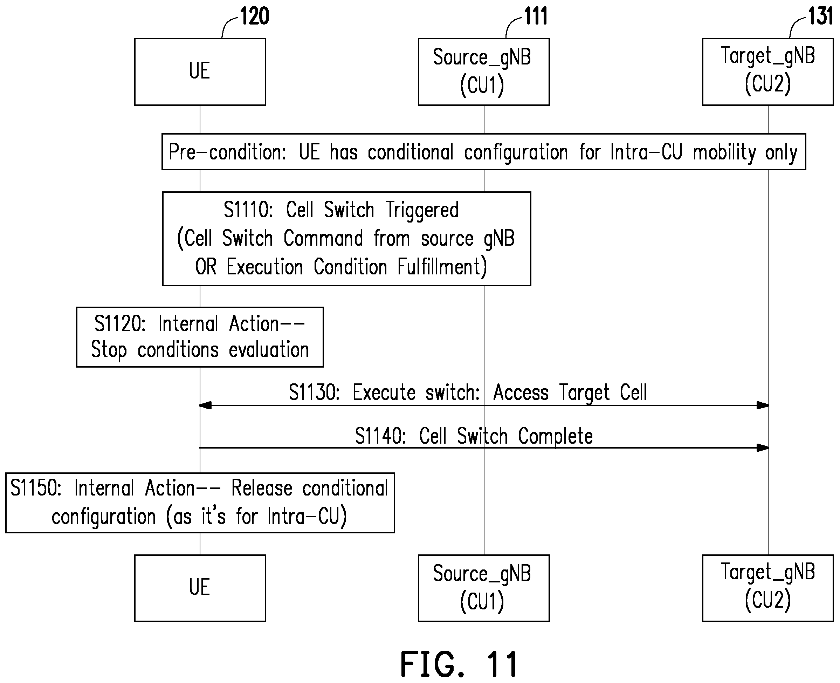

FIG. 11 is a sequence diagram that illustrates an inter-CU cell switch operation with conditional configuration release according to an exemplary embodiment of the present disclosure. Referring to FIG. 11, in an embodiment, this sequence diagram demonstrates the systematic coordination between UE 120, source gNB 111 (CU1), and target gNB 131 (CU2) during inter-Centralized Unit cell switch operations that require conditional configuration lifecycle management through evaluation suspension and configuration release protocols.

The operational sequence commences with a pre-condition state where UE 120 maintains conditional configuration for intra-CU mobility only, indicating that the processor 221 has previously received and stored conditional configuration parameters via the transceiver 223 that specifically support mobility operations exclusively within single Centralized Unit frameworks. This pre-condition establishes the foundational limitation that determines subsequent configuration management decisions when CU-level transitions occur during cell switch procedures.

In step S1110, cell switch triggering occurs through either network-directed commands or autonomous UE-initiated procedures based on conditional evaluation results. For network-directed triggering, source gNB 111 transmits a cell switch command to UE 120 via wireless communication protocols, directing the UE 120 to perform cell switch to the target cell within a different Centralized Unit (CU2). This command represents a non-conditional LTM cell switch instruction that initiates inter-CU mobility procedures based on network-side decision-making processes. Alternatively, for autonomous triggering, the processor 221 continuously monitors execution conditions for candidate cells specified in the conditional configuration and autonomously triggers cell switch operations when predetermined execution criteria are satisfied for target gNB 131. When the processor 221 determines through measurement analysis that target gNB's 131 signal quality parameters exceed configured thresholds or satisfy execution condition formulas, the processor 221 initiates conditional cell switch procedures without requiring explicit network commands. The processor 221 receives triggering signals through the transceiver 223 (for network commands) or generates triggering decisions internally (for condition fulfillment) and recognizes either triggering mechanism as an activation event that will necessitate CU-level architectural transition evaluation for conditional configuration compatibility assessment.

In step S1120, the processor 221 implements internal action to stop conditions evaluation, executing the protective mechanism that prevents conditional cell switch triggers during ongoing cell switch execution. This internal action encompasses suspension of measurement activities for candidate cells specified in the intra-CU conditional configuration and cessation of execution condition assessment processes. The evaluation suspension operates during the cell switch execution period while initiating preparatory analysis for post-completion configuration management decisions based on the anticipated CU-level transition characteristics.

In step S1130, UE 120 executes the cell switch by establishing connectivity with the designated target cell across Centralized Unit boundaries. The processor 221 initiates connectivity establishment while simultaneously receives and processes response signals from target gNB 131. The processor 221 manages both transmit and receive operations during this inter-CU access procedure, ensuring successful completion of all cross-CU connectivity establishment procedures.

In step S1140, UE 120 signals cell switch complete to target gNB 131, formally concluding the inter-CU mobility procedure and establishing operational connectivity within the new Centralized Unit framework. This completion notification indicates that the cell switch execution has been successfully finalized and triggers the evaluation of post-completion conditional configuration compatibility requirements based on the executed CU-level transition.

In step S1150, the processor 221 implements internal action to release conditional configuration, executing systematic deactivation of the intra-CU conditional configuration that is no longer applicable within the inter-CU operational context. The processor 221 determines that the completed cell switch constitutes an inter-Centralized Unit transition while the stored conditional configuration is designed exclusively for intra-CU mobility operations, creating an architectural incompatibility that necessitates configuration release. This release mechanism encompasses deletion of candidate cell information, execution condition parameters, and measurement configuration data from the memory 222, preventing potential operational conflicts that could arise from attempting to utilize CU-specific configuration parameters across different Centralized Unit operational environments. The systematic release process optimizes memory resource utilization and prepares the UE 120 to receive appropriate conditional configurations compatible with the target CU operational framework, ensuring system stability and operational coherence within the new Centralized Unit architecture.

It should be mentioned that, in an embodiment, the processor 221 implements differentiated timing protocols for evaluation suspension based on the specific triggering mechanism characteristics of ongoing cell switch operations. This differentiated approach recognizes the fundamental operational distinctions between network-initiated and UE-autonomous mobility procedures, implementing optimized suspension timing that aligns with each mobility management paradigm's inherent characteristics.

For non-conditional cell switch operations, the processor 221 implements immediate evaluation suspension upon reception of cell switch commands from network infrastructure via the transceiver 223. Specifically, when the processor 221 receives a non-conditional LTM cell switch command or handover command from source gNB 111, the processor 221 immediately initiates suspension protocols for cell switch conditions evaluation without temporal delay or additional assessment procedures. This immediate response framework acknowledges that non-conditional cell switch operations represent network-directed mobility decisions that require prompt UE compliance and implementation. The processor 221 recognizes the network command as the definitive triggering event that necessitates immediate protection against conditional cell switch triggers, ensuring that network-directed mobility procedures proceed without interference from autonomous UE mobility decision-making processes. The immediate suspension timing optimizes system responsiveness to network directives while preventing potential conflicts between network-controlled and UE-autonomous mobility mechanisms.

For conditional cell switch operations, the processor 221 implements evaluation suspension upon identification of conditional execution condition fulfillment that triggers the current conditional cell switch execution. Specifically, when the processor 221 determines through continuous measurement analysis that execution conditions specified in the conditional configuration have been satisfied for a particular candidate cell, the processor 221 initiates conditional cell switch procedures and simultaneously implements suspension protocols for ongoing cell switch conditions evaluation. This fulfillment-based suspension timing recognizes that conditional cell switch operations originate from UE-autonomous evaluation processes, requiring suspension activation precisely at the moment when autonomous mobility decision-making transitions from evaluation to execution phases. The processor 221 coordinates this timing to ensure that suspension occurs immediately following condition fulfillment detection, preventing additional conditional triggers from interfering with the initiated autonomous mobility procedure while maintaining evaluation continuity until the critical decision point is reached.

The operational impact of these differentiated timing protocols ensures systematic coordination between evaluation management and cell switch execution phases across diverse mobility scenarios. The processor 221 maintains protection against conditional cell switch triggers regardless of whether cell switch operations are network-directed or UE-autonomous, while optimizing suspension timing to accommodate the distinct operational characteristics and response requirements associated with each mobility management paradigm. This differentiated approach preserves system stability and operational efficiency through precise timing optimization that aligns with the inherent characteristics of different mobility triggering mechanisms, ensuring robust mobility management across heterogeneous network deployment scenarios and diverse UE mobility patterns.

Bsed on above, The methods, user equipment, and network devices for conditional cell switch disclosed herein achieve one or more of the following advantageous technical effects compared to the prior art:

Reduced Mobility Latency and Improved Handover Efficiency: By managing new conditional cell switch triggers during an ongoing cell switch (e.g., by suspending evaluation or ignoring triggers), the present disclosure effectively avoids the additional time delay caused by interrupting the current procedure to restart a new one, ensuring the smoothness and efficiency of the mobility process.

Enhanced Connectivity Robustness and Rapid Failure Recovery: The present disclosure provides a mechanism to continuously evaluate and store information of superior candidate cells during a cell switch. If the ongoing cell switch fails, the user equipment can immediately use these stored backup options to attempt a cell switch, bypassing traditional, time-consuming failure recovery procedures. This significantly reduces service interruption time and enhances the stability and reliability of the connection.

Full Support for Subsequent Mobility: Through precise determination of the CU-level scenario after a cell switch, the present disclosure resumes the conditional evaluation upon the completion of an intra-CU switch. This ensures that the user equipment can continuously utilize its conditional configuration for subsequent autonomous mobility decisions, fully complying with the requirements for subsequent mobility and improving long-term mobility management performance.

Optimized Configuration Management and Resource Utilization: After an inter-CU switch, the present disclosure releases the no-longer-applicable intra-CU conditional configuration. This prevents the user equipment from performing erroneous evaluations based on obsolete or incompatible parameters, thereby safeguarding system stability. Concurrently, this action frees up memory resources in the user equipment, improving resource utilization efficiency.

Flexible and Configurable Management Framework: The present disclosure not only defines autonomous behaviors for the user equipment but also discloses a framework where the network device actively configures UE behavior. This allows network operators to flexibly deploy the most suitable mobility management strategies based on network load, user mobility patterns, or Quality of Service (QoS) requirements, achieving more refined and intelligent network performance optimization.

## Claims

1. A method of conditional cell switch applied to a User Equipment, UE, (120) , the method comprising performing, by a processor (221) of the UE (120), a cell switch conditions evaluation, the method **characterized in that**:
upon a cell switch being triggered, stopping, by the processor (221), the cell switch conditions evaluation if the UE (120) is performing the cell switch conditions evaluation; and
determining, by the processor (221), whether to perform the cell switch conditions evaluation once the cell switch is completed.

2. The method of claim 1, wherein determining whether to perform the cell switch conditions evaluation once the cell switch is completed comprises:
determining, by the processor (221), whether at least one execution condition is configured within a selected candidate target configuration; and
in response to determining that the at least one execution condition is configured within the selected candidate target configuration, performing, by the processor (221), the cell switch conditions evaluation according to the at least one execution condition once the cell switch is completed.

3. The method of claim 2, wherein the at least one execution condition is for conditional cell switch evaluation.

4. The method of claim 2, wherein the selected candidate target configuration comprises a target cell (TC) configuration associated with the cell switch.

5. The method of claim 2, wherein before the cell switch being triggered, the method further comprising:
receiving, by a transceiver (223) of the UE (120), a conditional configuration, wherein the conditional configuration comprising at least one candidate cell; and
performing, by the processor (221), the cell switch conditions evaluation according to the conditional configuration.

6. The method of claim 1, wherein the cell switch being triggered comprises:
receiving, by a transceiver (223) of the UE (120), a cell switch command; or
upon fulfillment of at least one execution condition for the cell switch.

7. The method of claim 5, wherein determining that the at least one execution condition is configured within the selected candidate target configuration comprises:
determining, by the processor (221), that the cell switch is an intra-Centralized Unit, intra-CU, cell switch and the conditional configuration is an intra-CU cell switch configuration.

8. The method of claim 5, wherein determining that the at least one execution condition is configured within the selected candidate target configuration comprises:
determining, by the processor (221), that the conditional configuration is an inter-Centralized Unit, inter-CU, cell switch configuration.

9. The method of claim 5, further comprising:
in response to determining that the cell switch is an inter-Centralized Unit, inter-CU, cell switch and the conditional configuration is an intra-Centralized Unit, intra-CU, cell switch configuration, releasing, by the processor (221), the conditional configuration once the cell switch is completed.

10. The method of claim 5, wherein stopping the cell switch conditions evaluation comprises:
stopping measurement for the at least one candidate cell in the conditional configuration upon the cell switch.

11. A user equipment, UE, (120), adapted for performing conditional cell switch, comprising:
a transceiver (223), used for transmitting or receiving signals;
a memory (222), used for storing a program code; and
a processor (221), coupled to the transceiver (223) and the memory (222), and configured for executing the program code to implement a conditional cell switch method comprising performing a cell switch conditions evaluation,
the user equipment **characterized in that** the processor (221) is further configured to implement the method comprising:
upon a cell switch being triggered, stopping the cell switch conditions evaluation if the UE (120) is performing the cell switch conditions evaluation; and
determining whether to perform the cell switch conditions evaluation once the cell switch is completed.

12. The user equipment of claim 11, wherein determining whether to perform the cell switch conditions evaluation once the cell switch is completed comprises:
determining, by the processor (221), whether at least one execution condition is configured within a selected candidate target configuration; and
in response to determining that the at least one execution condition is configured within the selected candidate target configuration, performing, by the processor (221), the cell switch conditions evaluation according to the at least one execution condition once the cell switch is completed.

13. A method performed by a network device (110) for managing conditional cell switch of a User Equipment, UE, (120), the method comprising:
transmitting, by a transceiver (223) of the network device (110), a conditional configuration to the UE (120), wherein the conditional configuration comprises at least one candidate cell and at least one execution condition;
the method **characterized by** further comprising:
instructing, by a processor (221) of the network device (110), a UE (120) behavior during a cell switch execution.

14. The method of claim 13, wherein the UE (120) behavior comprises that the UE (120) stops a cell switch conditions evaluation during the cell switch execution.

15. The method of claim 13, wherein the UE (120) behavior comprises that the UE (120) stops measurement for the at least one candidate cell during the cell switch execution.

16. A network device (110) for managing conditional cell switch of a User Equipment, UE, (120), the network device (110) comprising:
a transceiver (223), used for transmitting or receiving signals;
a memory (222), used for storing a program code; and
a processor (221), coupled to the transceiver (223) and the memory (222), and configured for executing the program code to implement a conditional cell switch management method comprising:
transmitting a conditional configuration to the UE (120), wherein the conditional configuration comprises at least one candidate cell and at least one execution condition ;
the network device **characterized in that** the processor (221) is further configured to implement the method comprising:
instructing a UE (120) behavior during a cell switch execution.

17. The network device of claim 16, wherein the UE (120) behavior comprises that the UE (120) stops a cell switch conditions evaluation during the cell switch execution.

18. The network device of claim 16, wherein the UE (120) behavior comprises that the UE (120) stops measurement for the at least one candidate cell during the cell switch execution.
